# EUROPEAN PATENT SPECIFICATION

(11) **EP 3 265 500 B1**
(45) Date of publication and mention of the grant of the patent: **30.01.2019**
(21) Application number: 16711077.4
(22) Date of filing: 04.03.2016
(51) Int. Cl.: C08G 18/76, C08K 5/06, C09D 175/04, C08G 18/42, C08G 18/48, C08L 27/06, C08L 75/04

(54) **WATER BASED PRIMER COMPOSITION**
WASSERBASIERTE GRUNDIERUNGSZUSAMMENSETZUNG
COMPOSITION D'APPRÊT À BASE D'EAU

(30) Priority: 06.03.2015 US 201562129520 P
(43) Date of publication of application: 10.01.2018
(73) Proprietor: H. B. Fuller Company, St. Paul, Minnesota 55164-0683 (US)
(72) Inventor: PEREZ GARCIA, Luis, G., ES 36206 Vigo (Ponteverda) (ES); LAGO NUNEZ, Carmen, ES 36204 Vigo (Ponteverda) (ES); PANGAIO DA COSTA, Joel, A., PT 4475-461 Nogueira da Maia (PT); DE CALMES, Nicolas, FR, Blois 41000 (FR)
(74) Representative: Hansen, Norbert
(86) International application number: PCT/US2016/020890
(87) International publication number: WO 2016/144753

(56) References cited:
- WO-A1-98/53796
- WO-A1-2005/005504
- US-A1- 2003 084 995
- US-A1- 2014 262 020

## Description

### FIELD OF THE INVENTION

The present invention relates to a water based primer composition comprising an organic solvent selected from 2,5,7,10-tetraoxaundecane (TOU), propylene carbonate (PC), dimethyl-2-methylglutarate (IRIS) and dimethyl sulfoxide (DMSO) wherein said organic solvent comprises at least TOU. The invention also provides a method of surface-treating a substrate to improve adhesive bonding thereto. Moreover, the present invention is further directed to an article comprising a substrate surface-treated with the water based primer composition according to the invention.

### BACKGROUND OF THE INVENTION

Primer compositions or primers are employed in the art to improve the adhesion of adhesives or sealants to different substrates. The primer composition serves for improving the adhesion between a substrate surface-treated with the primer composition and the adhesive layer between the substrates to be bonded. Depending on the field of application, it is known to bond a variety of different substrates using a variety of different adhesives, wherein often special primer compositions are employed for specific kinds of substrates.

Plastic materials of low surface energy such as polyvinyl chloride (PVC) or acrylonitrile-butadiene-styrene (ABS) are difficult to bond. Therefore, to improve adhesion on such substrates primer compositions have to be used which prepare the surface for being bonded with an adhesive. The primer composition creates on the surface of the substrate to be bonded a certain roughness and thus improves anchorage of an adhesive for final bonding.

Primer compositions for treating low surface energy materials such as PVC or ABS are known in the art. These primer compositions contain aggressive N-methyl-pyrrolidone (NMP) or N-ethyl-pyrrolidone (NEP) based solvents capable to dissolve or attack the plastic material to some degree. Therefore, primer compositions for priming substrates such as PVC or ABS available on the market at present all include NMP or NEP.

However, aggressive solvents such as NMP or NEP are hazardous substances. Therefore, their use is meanwhile undesired. Rather, in 2015 these solvents will be classified as highly dangerous and will be declared as carcinogenic. Thus, there is a strong need in the art for primer compositions suitable for priming difficult to bond low energy materials such as PVC or ABS being free of aggressive hazardous substances such as NEP or NMP.

### SUMMARY OF THE INVENTION

The object of the present invention is to meet the above need. In particular, the object of the present invention is the provision of a primer composition suitable for priming difficult to bond low energy substrates such as PVC or ABS, while avoiding the use of hazardous solvents such as NMP and NEP.

The present invention provides a water based primer composition, comprising (a) an aqueous polyurethane (PU) dispersion, and (b) an organic solvent, wherein said organic solvent is selected from 2,5,7,10-tetraoxaundecane (TOU), propylene carbonate (PC), dimethyl-2-methylglutarate (IRIS) and dimethyl sulfoxide (DMSO). wherein said organic solvent comprises at least TOU.

The inventors of the present invention have found that compositions comprising an organic solvent selected from 2,5,7,10-tetraoxaundecane (TOU), propylene carbonate (PC), dimethyl-2-methylglutarate (IRIS), dimethyl sulfoxide (DMSO) wherein said organic solvent comprises at least TOU and combinations thereof effectively can prime low energy substrates such as PVC or ABS for improving adhesive bonding even without using hazardous substances such NEP and NMP. Therefore, the water based primer compositions according to the present invention are typically free of NMP or NEP. In certain embodiments, the water based primer compositions are free of NMP, NEP, or any other N-alkyl pyrrolidone derivative.

Accordingly, the present invention also relates to a method of surface-treating a substrate to improve adhesive bonding thereto, the method comprising applying a layer of a primer composition to a surface of the substrate to be treated, wherein the primer composition comprises an organic solvent selected from 2,5,7,10-tetraoxaundecane (TOU), propylene carbonate (PC), dimethyl-2-methylglutarate (IRIS) and dimethyl sulfoxide (DMSO) wherein said organic solvent comprises at least TOU, and drying the composition to form a primer coating. In certain embodiments, the water based primer composition according to the present invention described above is employed in the inventive method.

The present invention further provides an article comprising a substrate having at least one surface, and a layer of the water based primer composition according to the invention coated or applied on the at least one surface of the substrate.

Further embodiments of the present invention are apparent from the appended claims or the following detailed description.

### DETAILED DESCRIPTION OF THE INVENTION

In principle, primer compositions can be classified into solvent borne primer compositions and water borne primer compositions. The present invention relates to water borne or water based primer compositions.

The water based primer composition according to the present invention comprises (a) an aqueous polyurethane (PU) dispersion, and (b) an organic solvent, wherein said organic solvent is selected from 2,5,7,10-tetraoxaundecane (TOU), propylene carbonate (PC), dimethyl-2-methylglutarate (IRIS) and dimethyl sulfoxide (DMSO) wherein said organic solvent comprises at least TOU.

The inventors of the present invention have found that organic solvents selected from TOU, PC, IRIS or DMSO wherein said organic solvent comprises at least TOU are suitable to replace hazardous substances such as NMP or NEP typically used in conventional primer compositions. Thus, the water based primer composition of the present invention comprises an organic solvent selected from TOU, PC, IRIS and DMSO, wherein said organic solvent comprises at least TOU while the inventive primer composition is typically free of NMP, NEP or any other N-alkyl pyrrolidone derivative. Based on the total weight of the composition, the water based primer composition of the invention comprises in certain embodiments from about 0.5% by weight to about 25% by weight of organic solvent selected from TOU, PC, IRIS and DMSO wherein said organic solvent comprises at least TOU. For example, the water based primer composition according to the invention may comprise from about 2% by weight to about 15% by weight of said organic solvent, based on the total weight of the composition, such as e.g. about 3% by weight to about 10% by weight of TOU, PC, IRIS and/or DMSO.

The organic solvent comprises at least 2,5,7,10-tetraoxaundecane (TOU), which is an acetal type solvent typically used in the field of cleansing products. The chemical structure of TOU is shown below. 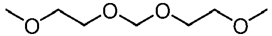 In preferred embodiments, the weight ratio of TOU to other organic solvent selected from propylene carbonate (PC), dimethyl-2-methylglutarate (IRIS) and dimethyl sulfoxide (DMSO) is about 1:1 or higher. More preferably, the weight ratio of TOU to other organic solvent selected from propylene carbonate (PC), dimethyl-2-methylglutarate (IRIS) and dimethyl sulfoxide (DMSO) is about 7:3 or higher, such as 5:1 or higher.

The organic solvent comprised in the water based primer composition according to the present invention is TOU. According to this embodiment, the water based primer composition does not comprise organic solvents except for TOU.

The water based primer compositions of the present invention further comprise an aqueous PU dispersion. In addition to an aqueous PU dispersion, the water based primer composition according to the present invention may further comprise an aqueous vinyl acetate ethylene (VAE) copolymer dispersion, an aqueous polyvinyl acetate (PVAc) dispersion and/or an aqueous acrylic polymer dispersion. In addition, the water based primer composition may comprise different polymer dispersions.

In one embodiment, the water based primer composition comprises 10 up to 70 % by weight of an aqueous PU dispersion, and optionally up to 50% by weight of an aqueous VAE copolymer dispersion, PVAc dispersion and/or acrylic dispersion, including water in the dispersions. Polymer dispersions for use in water based primer compositions are in principle known in the art. Typical PU dispersions may have a solids content of e.g. about 40% by weight to about 50% by weight. Typical VAE dispersions may have a solids content of e.g. about 40% by weight to about 70% by weight. Typical PVAc dispersions may have a solids content of e.g. about 40% by weight to about 60% by weight. Typical acrylic dispersions may have a solids content of e.g. about 40% by weight to about 70% by weight, such as for example up to 69% by weight.

The following detailed description is by way of illustration mainly focused on PU dispersions.

PU dispersion is a generic word describing several different methodologies to produce and stabilize in water PU polymer. Anionic, cationic or nonionic stabilized PU dispersions can be used.

The PU is derived from a polyisocyanate on the one hand and a polyol on the other hand. The polyol may be e.g. a polyester polyol, or polyether polyol and may optionally be mixed with polycarbonate.

The PU preferably has an elongation break in % according to DIN 53504 between 100-1600, more preferably 500-1000. Furthermore, the PU preferably has a melting temperature according to Kofler heating table between about 80°C to about 300°C, more preferably about 85°C to about 240°C. Additionally or alternatively, the PU preferably has a tensile strength according to DIN 53504 of 6-50 MPas, more preferably 15-40 MPas.

illustrative examples of suitable PU dispersion include but are not limited to Dispercoll® U42, Dispercoll® U 2849 XP and Impranil® DLP-R from BAYER, or Alberdingk® U 4040 VP from ALBERDINGK.

The PU dispersion can be used as main polymer backbone or can be blended with VAE copolymer and/or can be blended with PVAc dispersion and/or can be blended with an acrylic dispersion to adjust mechanical property to a ratio between 0-50 % of total weight of the final recipe.

An aqueous vinyl acetate-ethylene (VAE) copolymer emulsion is typically prepared in water by polymerization of vinyl acetate and ethylene in the presence of a polyvinyl alcohol stabilizing system. Illustrative examples of VAE dispersion suitable according to the invention include but are not limited to Elvace®735 or Elvace®736 from HB Fuller.

An aqueous PVAc dispersion is typically prepared in water by polymerization of vinyl acetate in the presence of a polyvinyl alcohol stabilizing system. Illustrative examples of PVAc dispersions suitable according to the invention include but are not limited to Emuldec® HP-50 GR or Emuldec® HP-62 from HB Fuller.

An aqueous acrylic dispersion is typically prepared in water by polymerization of one or more acrylic or methacrylic monomers, such as (meth) acrylic ester monomers in the presence of anionic surfactant or polyvinyl alcohol. Common (meth)acrylic monomers include e.g. methyl acrylate, ethyl acrylate, butyl acrylate, 2-ethylhexyl acrylate, decyl acrylate, lauryl acrylate, stearyl acrylate, methyl methacrylate, butyl methacrylate, hydroxyethyl methacrylate, hydroxypropyl methacrylate, aminoalkyl (meth)acrylate, N-alkyl aminoalkyl (meth)acrylate, N,N-dialkyl aminoalkyl (meth)acrylate; ureido (meth)acrylate; (meth)acrylonitrile or (meth)acrylamide. Illustrative examples of acrylic dispersions suitable according to the invention include but are not limited to Emuldec® A-3226 or Emuldec® A-3270 from HB Fuller or Plextol® M630 from Synthomer.

The total amount of water in the primer composition is typically from about 10% by weight to about 80% by weight of water, including water in the polymer dispersions. Preferably, the total amount of water in the primer composition is from about 40% by weight to about 70% by weight, such as e.g. about 50% by weight to about 60% by weight.

The dry amount of polymer including PU and optionally VAE, PVAc and/or acrylic polymer in the primer composition of the invention may in some embodiments range from about 5% by weight to about 40% by weight. In certain embodiments, the dry amount of polymers ranges from about 10% by weight to about 30% by weight, such as from about 10% by weight to about 20% by weight.

The water based primer composition according to the present invention preferably has a solids content according to ASTDM D1489-09 of from about 15% to about 60%, more preferably from about 20% to about 40%, such as e.g. about 20% by weight to about 30% by weight.

The water based primer composition according to the present invention may also comprise usual additives. For example, additives such as UV tracers (optical britheners), wetting agents (surfactants), fillers, viscosity modifiers (thickeners) or antifoaming systems may optionally be added. Furthermore, additives for adjusting the pH of the primer composition may be added.

In one embodiment, the primer composition comprises an UV tracer. UV tracers may also be referred to as optical brighteners or optical brightening agents (OBA). Such UV tracers are chemical compounds that absorb light in the ultraviolet and violet region (usually 340-370 nm) of the electromagnetic spectrum, and re-emit light in the blue region (typically 420-470 nm). In some embodiments of the present invention, the UV tracer is included in an amount of less than about 0.1% by weight, based on the total weight of the primer composition. Illustrative examples of UV tracers suitable according to the invention are known to a person skilled in the art and include but are not limited to Bentex OB available from Mayzo Inc., Uvitex OB available from Ciba Specialty Chemicals, Optiblanc PL from 3V Sigma, or Lunabrite OB.

Wetting agent, also referred to as surfactant, may be mainly used to improve wetting property of the wet film on the final substrate and the final content will depend on the surface tension of substrate. Wetting agents or surfactants can further be used to improve the stability of fillers inside the surrounding water recipe. There are four main types of wetting agents: anionic, cationic, amphoteric, and nonionic. Anionic, cationic, and amphoteric wetting agents ionize when mixed with water. Anions have a negative charge, while cations have a positive charge. Amphoteric wetting agents can act as either anions or cations, depending on the acidity of the solution. Nonionic wetting agents do not ionize in water. The wetting agent, if present, may be used e.g. in an amount of 0.05 to 2% by weight, based on the total weight of the primer composition. Illustrative examples of wetting agents suitable according to the invention include but are not limited to Lumiten® I-SC from BASF, Surfynol® 104 or Dynol® 604 from AIR PRODUCTS, or Disponil® SUS 87 from BTC.

Typical fillers to be included in water based primer compositions are known in the art. For example, the filler can be an organic or inorganic filler of any form. Specific examples thereof include fumed silica, calcined silica, precipitated silica, pulverized silica, molten silica; diatomaceous earth; iron oxide, zinc oxide, titanium oxide, barium oxide, magnesium oxide; calcium carbonate, magnesium carbonate, zinc carbonate; pyrophyllite clay, kaolin clay, calcined clay; fatty acid treated products, resin acid treated products, urethane compound treated products, and fatty acid ester treated products thereof; and the like. Fillers may optionally be included in the primer composition according to the invention e.g. in an amount of up to 15% by weight, such as about 3% by weight to about 12% by weight, or about 3% by weight to about 10% by weight. Illustrative examples of fillers suitable according to the invention include but are not limited to Syloyd® ED 3 from GRACE, Sillitin® Z86 from HOFFMANN-MINERAL, or Acrosil® 150 from EVONIK.

To adjust viscosity several technologies are available. The desired viscosity may be adjusted using e.g. a viscosity modifier or thickener such as neutralized polyacrylate, a PU thickener or natural thickener like cellulose or Xanthan gum. The thickener content will mainly depend on the final targeted viscosity of the product and rheology that product has to develop. For example, the primer composition of the invention may contain thickener in an amount of up to about 15% by weight, such as e.g. about 3% by weight to about 12% by weight, or 3% by weight to about 10% by weight. The target viscosity range of the water based primer composition will in some embodiments typically be within the range of about 100 to about 3000 mPa·s, preferably about 200 to about 1000 mPa·s, depending on the desired application and the type of material. An illustrative example of a thickener suitable according to the invention includes but is not limited to HF 542 from HB Fuller.

The optional antifoam system will can e.g. be a silicon or mineral oil system and final content, if present, can be between 0.02 up to 3% by weight, based on the total weight of the primer composition. Illustartive examples of antifoaming agents suitable according to the invention include but are not limited to Agitan® 381 from MUNZING or Tego® 50 and Tego® 2-80 from EVONIK.

In some embodiments, the water based primer composition according to the present invention will have a pH of about 6 - 9, or between about 7.5-8.8. The pH of the primer composition can suitably be adjusted, if necessary, using e.g. ammonia.

As mentioned above, the present invention also relates to a method of surface-treating a substrate to improve adhesive bonding thereto. The method of the present invention comprises applying a layer of a primer composition to a surface of the substrate to be treated, wherein the primer composition comprises an organic solvent selected from 2,5,7,10-tetraoxaundecane (TOU), propylene carbonate (PC), dimethyl-2-methylglutarate (IRIS) and dimethyl sulfoxide (DMSO), wherein said organic solvent comprises at least TOU and drying the composition to form a primer coating. Alternatively, the invention relates to the use of an organic solvent selected from TOU, PC, IRIS and DMSO wherein said organic solvent comprises at least TOU in primer compositions for improving adhesive bonding to a substrate. In other preferred embodiment of the method or use, said organic solvent is TOU.

In certain embodiments, the primer compositions according to the present invention as described above are employed in the inventive method.

The method of applying or coating the primer composition onto the substrate is not particularly limited. For example, the primer composition can be applied with all kinds of rollers (such as steel or rubber rollers), or combinations with inline and reverse rotation of the roll, by spraying or with a roll coater or coating knife, etc.

The drying temperature is not particularly limited. Typically drying can be done at elevated temperature, such as about 60°C to about 100°C, e.g. about 70°C to about 90°C. The drying time is sufficiently long to ensure that the primer composition can interact with the substrate to improve adhesive bonding. This is typically achieved within e.g. about one minute or less, such as about 10 seconds to about 40 seconds, or about 20 seconds to about 30 seconds.

Substrates that advantageously can be treated according to the invention include but are not limited to substrates comprising polyvinyl chloride (PVC), acrylonitrile-butadiene-styrene (ABS), polypropylene (PP), polyethylene terephthalate (PET), poly methyl methacrylate (PMMA), polystyrene (PS), polyester impregnated paper, or melamine impregnated paper.

The primer composition may in one embodiment be applied as a continuous coating. The obtained coating dry weight is preferably 0.5 to 25 g/m², more preferably 1 to 15 g/m², such as e.g. about 2 g/m² to about 8 g/m².

The present invention also relates to an article comprising a substrate having at least one surface, and a layer of the primer composition according to the invention coated on the at least one surface of the substrate. Suitable substrates already have been discussed above and include but are not limited to low surface energy substrates comprising e.g. polyvinyl chloride (PVC), acrylonitrile-butadiene-styrene (ABS), polypropylene (PP), polyethylene terephthalate (PET), poly methyl methacrylate (PMMA), polystyrene (PS), polyester impregnated paper, or melamine impregnated paper. Specific examples of the articles according to the invention include but are not limited to an edge band, window profile or PVC-profile.

Adhesives that can advantageously be employed in connection with the primer composition of the invention are not particularly limited as long as a good bonding between adhesive and primer layer is achieved. For example, suitable adhesives may include hot melt adhesives, such as hot melt moisture cure polyurethane adhesives (HMMC), hot melt ethylene-vinylacetate adhesives (HM EVA), or hot melt adhesives based on amorphous poly-alpha-olefins (HM APAO). In some embodiments, the adhesive is a HMMC adhesive.

### Working examples

In order to find solvents suitable for replacing hazardous substances such as NMP or NEP in primer compositions intensive screening was done. Various solvents or solvent mixtures were tested. Only non-hazardous solvents were preselected. In each case a substrate specimen having a size of 60x10x1 mm was immersed for 24 hours at room temperature into 20 ml of solvent or solvent mixture. The solvent replacing NMP or NEP in the primer composition should show a significant attack on the various substrate materials at least comparable to the results obtained with the hazardous substances NMP or NEP currently in use. The observed results were rated as follows:
0 - No attack
1 - Surface slight attack
2 - Swelling of the material
3 - Strong attack with deformation of the material
4 - Completely dissolved

The obtained test results are shown in the table below:

| **SOLVENT** | **MATERIAL** | | | |
|---|---|---|---|---|
| | **PVC** | **ABS** | **PS** | **PET** |
| **NEP** | 3 | 4 | 4 | 1 |
| **NMP** | 1 | 1 | 0 | 0 |
| **IRIS** | 1 | 4 | 4 | 0 |
| **DMSO** | 1 | 4 | 0 | 0 |
| **PC** | 0 | 4 | 0 | 0 |
| **TOU** | 2 | 4 | 4 | 1 |
| **TOU + PC (1:1)** | 1 | 4 | 1 | 1 |
| **TOU + IRIS (1:1)** | 1 | 4 | 4 | 0 |
| **TOU + DMSO (1:1)** | 3 | 4 | 2 | 1 |
| **DMSO + IRIS (1:1))** | 3 | 4 | 2 | 1 |

As can be seen from the above, non-hazardous solvents selected from TOU, PC, IRIS or DMSO show a profile of effect on different substrate materials at least comparable to the hazardous substances to be replaced. Therefore, TOU, PC, IRIS and DMSO or mixtures thereof are suitable to replace NMP or NEP in primer compositions. In order to show that in fact water based primer compositions comprising polymer dispersion and selected organic solvent can be obtained, the following specific examples are provided.

### Working example 1

| | **Type** | **Wt.-%** |
|---|---|---|
| **Water** | | 51.19 |
| **PU dispersion** | Dispercoll U42 | 33.6 |
| **Organic solvent** | TOU | 5 |
| **Thickener** | HF542 | 6.3 |
| **Filler** | Aerosil 150 | 3 |
| **Wetting agent** | Dynol 604 | 0.2 |
| **Wetting agent** | Lumitent I-SC | 0.3 |
| **Antifoaming agent** | Agitan 381 | 0.25 |
| **Ammonia 25%** | - | 0.06 |

### Working example 2

| | **Type** | **Wt.-%** |
|---|---|---|
| **Water** | - | 43.80 |
| **PU dispersion** | Impranil DLP-R | 33.3 |
| **Organic solvent** | TOU | 4.6 |
| **Thickener** | HF542 | 7 |
| **Filler** | Syloid ED3 | 6 |
| **Wetting agent** | Dynol 604 | 0.2 |
| **Wetting agent** | Disponil SUS 87 | 0.2 |
| **Antofoaming agent** | Agitan 381 | 0.25 |
| **VAE dispersion** | Elvace 735 | 4.6 |
| **Ammonia 25%** | - | 0.05 |

### Working example 3

| | **Type** | **Wt.-%** |
|---|---|---|
| **Water** | - | 42.66 |
| **PU dispersion** | Dispercoll U 2849 XP | 29.74 |
| **Organic solvent** | TOU | 4.6 |
| **Thickener** | HF542 | 10.8 |
| **Filler** | Sillitin Z86 | 7.2 |
| **Wetting agent** | Dynol 604 | 0.2 |
| **Wetting agent** | Surfynol 104 | 0.2 |
| **Antifoaming agent** | Tego 2-80 | 0.05 |
| **Acrylic dispersion** | Plextol M630 | 4.5 |
| **Ammonia 25%** | - | 0.05 |

### Working example 4

| | **Type** | **Wt.-%** |
|---|---|---|
| **Water** | - | 38.72 |
| **PU dispersion** | Alberdingk U4040 VP | 36.27 |
| **Organic solvent** | TOU | 4.9 |
| **Thickener** | HF542 | 11.76 |
| **Filler** | Syloid ED3 | 7.84 |
| **Wetting agent** | Dynol 604 | 0.2 |
| **Wetting agent** | Surfynol 104 | 0.2 |
| **Antifoaming agent** | Tego 2-80 | 0.05 |
| **Ammonia 25%** | - | 0.06 |

## Claims

1. A water based primer composition, comprising
(a) an aqueous polyurethane (PU) dispersion, and
(b) an organic solvent, wherein said organic solvent is selected from 2,5,7,10-tetraoxaundecane (TOU), propylene carbonate (PC), dimethyl-2-methylglutarate (IRIS) and dimethyl sulfoxide (DMSO), wherein said organic solvent comprises at least TOU.

2. The water based primer composition according to claim 1, wherein the composition is free of N-methyl-pyrrolidone (NMP) or N-ethyl-pyrrolidone (NEP), and preferably is free of N-methyl-pyrrolidone (NMP) and N-ethyl-pyrrolidone (NEP).

3. The water based primer composition according to claim 1 or 2, further comprising a polymer dispersion selected from a vinyl acetate ethylene copolymer (VAE) dispersion, a polyvinyl acetate (PVAc) dispersion and an acrylic polymer dispersion.

4. The water based primer composition according to claim 1, wherein the weight ratio of TOU to other organic solvent selected from propylene carbonate (PC), dimethyl-2-methylglutarate (IRIS) and dimethyl sulfoxide (DMSO) is about 1:1 or higher, preferably is about 7:3 or higher.

5. The water based primer composition according to claims 1 or 4, wherein said organic solvent is TOU.

6. The water based primer composition of claim 1 wherein the aqueous polyurethane (PU) dispersion is an anionic dispersion.

7. The water based primer composition according to any one of claims 1-6, wherein the composition comprises, based on the total composition
from about 0.5% by weight to about 25% by weight, preferably from about 2% by weight to about 15% by weight of said organic solvent; and/or
from about 30% by weight to about 80% by weight of water, preferably from about 40% by weight to about 70% by weight of water; and/or
from about 5% by weight to about 40% by weight, preferably from about 10% by weight to about 20% by weight of dry amount of polymer including PU and optionally VAE, PVAc and acrylic polymer.

8. The water based primer composition according to any one of the claims 1-7, wherein the composition has a solids content according to ASTDM D1489-09 of from about 15% to about 60%, preferably from about 20% to about 40%.

9. A method of surface-treating a substrate to improve adhesive bonding thereto, the method comprising
applying a layer of a primer composition as defined in any one of claims 1-8 to a surface of the substrate to be treated. and
drying the composition to form a primer coating.

10. The method of claim 9, wherein the substrate comprises polyvinyl chloride (PVC), acrylonitrile-butadiene-styrene (ABS), polypropylene (PP), polyethylene terephthalate (PET), poly methyl methacrylate (PMMA), polystyrene (PS), polyester impregnated paper, or melamine impregnated paper.

11. The method according to of claim 9 or 10, wherein the primer composition is applied to obtain a coating dry weight of 0.5 to 25 g/m², preferably 1 to 15 g/m².

12. An article comprising
a substrate having at least one surface, and
a layer of the primer composition as defined in any one of claims 1-8 coated on the at least one surface of the substrate.

13. The article of claim 12, wherein the substrate is a low surface energy substrate comprising polyvinyl chloride (PVC), acrylonitrile-butadiene-styrene (ABS), polypropylene (PP), polyethylene terephthalate (PET), poly methyl methacrylate (PMMA), polystyrene (PS), polyester impregnated paper, or melamine impregnated paper.

14. The article of claim 12 or 13, wherein the article comprises edge band, window profile or PVC-profile.

15. The article of any one of claims 12-14, wherein the article further comprises an adhesive, preferably a hot melt adhesive, more preferably a hot melt adhesive selected hot melt moisture cure polyurethane adhesives (HMMC), hot melt ethylene-vinylacetate adhesives (HM EVA), and hot melt adhesives based on amorphous poly-alpha-olefins (HM APAO), wherein still more preferably the adhesive is a HMMC adhesive.

## Patentansprüche

1. Wasserbasierte Grundierungszusammensetzung, umfassend
(a) eine wässrige Polyurethandisperson (PU), und
(b) ein organisches Lösungsmittel, wobei das organische Lösungsmittel ausgewählt ist aus 2,5,7,10-Tetraoxaundecane (TOU), Propylencarbonat (PC), Dimethyl-2-methylglutarat (IRIS) und Dimethylsulfoxid (DMSO), wobei das organische Lösungsmittel mindestens TOU umfasst.

2. Wasserbasierte Grundierungszusammensetzung gemäß Anspruch 1, wobei die Zusammensetzung frei von N-Methyl-pyrrolidon (NMP) oder N-Ethyl-pyrrolidon (NEP) ist, und vorzugsweise frei von N-Methyl-pyrrolidon (NMP) und N-Ethyl-pyrrolidon (NEP) ist.

3. Wasserbasierte Grundierungszusammensetzung gemäß Anspruch 1 oder 2, weiterhin eine Polymerdispersion umfassend, ausgewählt aus einer Vinylacetat-Ethylen-Copolymerdispersion (VAE), einer Polyvinylacetatdispersion (PVAc) und einer Acrylpolymerdispersion.

4. Wasserbasierte Grundierungszusammensetzung gemäß Anspruch 1, wobei das Gewichtsverhältnis von TOU zu anderen organischen Lösungsmitteln, ausgewählt aus Propylencarbonat (PC), Dimethyl-2-methylglutarat (IRIS) und Dimethylsulfoxid (DMSO), etwa 1 : 1 oder mehr, vorzugsweise etwa 7 : 3 oder mehr beträgt.

5. Wasserbasierte Grundierungszusammensetzung gemäß den Ansprüchen 1 oder 4, wobei das organische Lösungsmittel TOU ist.

6. Wasserbasierte Grundierungszusammensetzung gemäß Anspruch 1, wobei die wässrige Polyurethandispersion (PU) eine anionische Dispersion ist.

7. Wasserbasierte Grundierungszusammensetzung gemäß einem der Ansprüche 1 bis 6, wobei die Zusammensetzung, basierend auf der Gesamtzusammensetzung, umfasst von etwa 0,5 Gewichtsprozent bis etwa 25 Gewichtsprozent, vorzugsweise von etwa 2 Gewichtsprozent bis etwa 15 Gewichtsprozent des organischen Lösungsmittels; und/oder von etwa 30 Gewichtsprozent bis etwa 80 Gewichtsprozent an Wasser, vorzugsweise von etwa 40 Gewichtsprozent bis etwa 70 Gewichtsprozent an Wasser; und/oder von etwa 5 Gewichtsprozent bis etwa 40 Gewichtsprozent, vorzugsweise von etwa 10 Gewichtsprozent bis etwa 20 Gewichtsprozent Trockenmenge an Polymer, einschließlich PU und ggf. VAE, PVAc und Acrylpolymer.

8. Wasserbasierte Grundierungszusammensetzung gemäß einem der Ansprüche 1 bis 7, wobei die Zusammensetzung einen Feststoffgehalt gemäß ASTDM D1 489-09 von etwa 15 Prozent bis etwa 60 Prozent aufweist, vorzugsweise von etwa 20 Prozent bis etwa 40 Prozent.

9. Verfahren zur Oberflächenbehandlung eines Substrats, um das Adhäsionskleben daran zu verbessern, wobei das Verfahren umfasst
Aufbringen einer Schicht einer in den Ansprüchen 1 bis 8 definierten Grundierungszusammensetzung auf die Oberfläche des zu behandelnden Substrats, und Trocknen der Zusammensetzung, um eine Grundierungsbeschichtung zu bilden.

10. Verfahren gemäß Anspruch 9, wobei das Substrat Polyvinylchlorid (PVC), Acryl und Nitril-Butadien-Styrol (ABS), Polypropylen (PP), Polyethylenterephthalat (PET), Polymethylmethacrylat (PMMA), Polystyrol (PS), mit Polyester imprägniertes Papier oder mit Melamin imprägniertes Papier umfasst.

11. Verfahren gemäß Anspruch 9 oder 10, wobei die Grundierungszusammensetzung aufgebracht wird, um ein Beschichtungstrockengewicht von 0,5 bis 25 g/m² zu erhalten, vorzugsweise 1 bis 15 g/m².

12. Gegenstand, umfassend
ein Substrat mit mindestens einer Oberfläche, und
einer Schicht der in einem der Ansprüche 1 bis 8 definierten Grundierungszusammensetzung, welche auf die mindestens eine Oberfläche des Substrats beschichtet ist.

13. Gegenstand gemäß Anspruch 12, wobei das Substrat ein Substrat mit niedriger Oberflächenenergie ist, umfassend Polyvinylchlorid (PVC), Acrylnitril-Butadien-Styrol (ABS), Polypropylen (PP), Polyethylenterephthalat (PET), Polymethylmethacrylat (PMMA), Polystyrol (PS), mit Polyester imprägniertes Papier oder mit Melamin imprägniertes Papier.

14. Gegenstand gemäß Anspruch 12 oder 13, wobei der Gegenstand ein Kantenbandprofil, Fensterprofil oder PVC-Profil umfasst.

15. Gegenstand gemäß einem der Ansprüche 12 bis 14, wobei der Gegenstand weiterhin einen Klebstoff umfasst, vorzugsweise einen Schmelzklebstoff, stärker bevorzugt einen Schmelzklebstoff, ausgewählt aus feuchtigkeitshärtenden Polyurethanschmelzklebstoffen (HMMC), Ethylen-Vinylacetat-Schmelzklebstoffen (HM EVA), und Schmelzklebstoffen auf Basis von amorphen Poly-Alpha-Olefinen (HM APAO), wobei noch stärker bevorzugt der Klebstoff ein HMMC-Klebstoff ist.

## Revendications

1. Une composition d'apprêt à base d'eau, comprenant
(a) une dispersion aqueuse de polyuréthane (PU), et
(b) un solvant organique, ledit solvant organique étant choisi parmi le 2,5,7,10-tétraoxaundécane (TOU), le carbonate de propylène (PC), le diméthyl-2-méthylglutarate (IRIS) et le diméthyle sulfoxyde (DMSO), ledit solvant organique comprenant au moins du TOU.

2. La composition d'apprêt à base d'eau selon la revendication 1, dans laquelle la composition est exempte de N-méthyl-pyrrolidone (NMP) ou de N-éthyle-pyrrolidone (NEP), et est de préférence exempte de N-méthyl-pyrrolidone (NMP) et de N-éthyle-pyrrolidone (NEP).

3. La composition d'apprêt à base d'eau selon la revendication 1 ou la revendication 2, comprenant en outre une dispersion de polymère choisie parmi une dispersion de copolymère d'acétate de vinyle et d'éthylène (VAE), une dispersion de polyacétate de vinyle (PVAc) et une dispersion de polymère acrylique.

4. La composition d'apprêt à base d'eau selon la revendication 1, dans laquelle le rapport pondéral du TOU à un autre solvant organique choisi parmi le carbonate de propylène (PC), le diméthyl-2-méthylglutarate (IRIS) et le diméthyle sulfoxyde (DMSO) est d'environ 1:1 ou plus, de préférence est de 7:3 ou plus.

5. La composition d'apprêt à base d'eau selon les revendications 1 ou 4, dans laquelle ledit solvant organique est le TOU.

6. La composition d'apprêt à base d'eau selon la revendication 1, dans laquelle la dispersion aqueuse de polyuréthane (PU) est une dispersion anionique.

7. La composition d'apprêt à base d'eau selon l'une quelconque des revendications 1 à 6, dans laquelle la composition comprend, par rapport à la composition totale,
d'environ 0,5% en poids à environ 25% en poids, de préférence d'environ 2% en poids à environ 15% en poids, dudit solvant organique ; et/ou
d'environ 30% en poids à environ 80% en poids d'eau, de préférence d'environ 40% en poids à environ 70% en poids d'eau ; et/ou
d'environ 5% en poids à environ 40% en poids, de préférence d'environ 10% en poids à environ 20% en poids, de quantité sèche de polymère incluant du PU et éventuellement du VAE, du PVAc et un polymère acrylique.

8. La composition d'apprêt à base d'eau selon l'une quelconque des revendications 1 à 7, dans laquelle la composition a une teneur en solides selon ASTDM D1489-09 d'environ 15% à environ 60%, de préférence d'environ 20% à environ 40%.

9. Un procédé de traitement de surface d'un substrat pour améliorer sa liaison adhésive, le procédé comprenant
le fait d'appliquer une couche d'une composition d'apprêt telle que définie dans l'une quelconque des revendications 1-8 sur une surface du substrat à traiter, et
le fait de sécher la composition pour former une couche d'apprêt.

10. Le procédé selon la revendication 9, dans lequel le substrat comprend du polychlorure de vinyle (PVC), de l'acrylonitrile-butadiène-styrène (ABS), du polypropylène (PP), du polyéthylène téréphtalate (PET), du polyméthacrylate de méthyle (PMMA), du polystyrène (PS), du papier imprégné de polyester ou du papier imprégné de mélamine.

11. Le procédé selon la revendication 9 ou la revendication 10, dans lequel la composition d'apprêt est appliquée pour obtenir un poids sec de revêtement de 0,5 à 25 g/m², de préférence 1 à 15 g/m².

12. Un article comprenant
un substrat ayant au moins une surface, et
une couche de la composition d'apprêt telle que définie dans l'une quelconque des revendications 1 à 8 appliquée sur ladite au moins une surface du substrat.

13. L'article selon la revendication 12, dans lequel le substrat est un substrat à faible énergie de surface comprenant du polychlorure de vinyle (PVC), de l'acrylonitrile-butadiène-styrène (ABS), du polypropylène (PP), du polyéthylène téréphtalate (PET), du polyméthacrylate de méthyle (PMMA), du polystyrène (PS), du papier imprégné de polyester ou du papier imprégné de mélamine.

14. L'article selon la revendication 12 ou la revendication 13, dans lequel l'article comprend une bande de bordure, un profilé de fenêtre ou un profilé en PVC.

15. L'article selon l'une quelconque des revendications 12 à 14, dans lequel l'article comprend en outre un adhésif, de préférence un adhésif thermofusible, de façon encore préférée un adhésif thermofusible choisi parmi des adhésifs de polyuréthanne thermofusibles à durcissement par l'humidité (HMMC), des adhésifs d'éthylène-acétate de vinyle thermofusibles (HM EVA) et des adhésifs thermofusibles à base de poly-alfa-oléfines amorphes (HM APAO), l'adhésif étant de façon encore préférée un adhésif HMMC.
